# EUROPÄISCHE PATENTSCHRIFT

(11) **EP 2 898 191 B1**
(45) Veröffentlichungstag und Bekanntmachung des Hinweises auf die Patenterteilung: **19.07.2023**
(21) Anmeldenummer: 13802868.3
(22) Anmeldetag: 17.09.2013
(51) Int. Cl.: F01K 3/18, F01K 3/00, F01K 21/04, F02C 3/30, F22B 1/00, F22B 1/28, F28D 20/00, F28D 20/02

(54) **SYSTEM ZUR ERZEUGUNG VON HEISSWASSER UND/ODER DAMPF MIT HOCHTEMPERATURSPEICHER FÜR DEN EINSATZ IN EINEM GASTURBINENWERK**
SYSTEM FOR PRODUCING HOT WATER AND/OR STEAM HAVING A HIGH-TEMPERATURE RESERVOIR FOR USE IN A GAS TURBINE POWER STATION
SYSTÈME DE PRODUCTION D'EAU CHAUDE ET/OU DE VAPEUR COMPORTANT UN ACCUMULATEUR À HAUTE TEMPÉRATURE POUR UNE UTILISATION DANS UNE CENTRALE ÉLECTRIQUE À TURBINE À GAZ

(30) Priorität: 18.09.2012 DE 202012103544 U
(43) Veröffentlichungstag der Anmeldung: 29.07.2015
(73) Patentinhaber: Technische Universität Chemnitz, 09111 Chemnitz (DE)
(72) Erfinder: URBANECK, Thorsten, 09125 Chemnitz (DE); PLATZER, Bernd, 09235 Burkhardtsdorf/Neuei. (DE); LOTTNER, Volkmar, 52428 Jühlich (DE)
(74) Vertreter: Rumrich, Gabriele
(86) Internationale Anmeldenummer: PCT/DE2013/100333
(87) Internationale Veröffentlichungsnummer: WO 2014/044254

(56) Entgegenhaltungen:
- WO-A1-2010/127785
- WO-A2-2012/052661
- DE-A1-102009 036 550
- DE-U1-202011 000 786
- GB-A- 2 060 859

## Beschreibung

Die Erfindung betrifft ein System zur Erzeugung von Heißwasser und/oder Dampf mit Hochtemperaturspeicher für den Einsatz in einem Gasturbinenkraftwerk.

### Stand der Technik

Gasturbinen-Kraftwerke können zur alleinigen Stromerzeugung oder zur gleichzeitigen Bereitstellung von Strom und Wärme (KWK... Kraft-Wärme-Kopplung) herangezogen werden.

Mit der Nachschaltung eines geschlossenen Dampfkreisprozesses kann man das Kraftwerk zum kombinierten Gas- und Dampfkraftwerk (GuD) erweitern. Weiterhin ist die Luftvorwärmung für Kohlekraftwerke bekannt.

Bei der Kraft-Wärme-Kopplung wird der Abgasstrom zu Heizzwecken genutzt:
- Nachschaltung eines technologischen Prozesses (z. B. Kohletrocknung),
- Auskopplung für die kommunale Wärmeversorgung (z. B. Fernwärme),
- Industriekraftwerke mit Prozesswärmesystem usw.

Es ist eine bedarfsgerechte Bereitstellung von Strom und Wärme möglich, denn der Prozess ist schnell regelbar. Es bestehen damit besonders gute Voraussetzungen zur Bereitstellung von Regelenergie.

Zur Prozessoptimierung mittels Speichertechnik wurde bisher nur Luft als Speichermedium diskutiert und umgesetzt. Nachteilig ist bei der Verwendung von unterirdischen Druckluft-Kavernenspeichern, dass diese eine bestimmte Geologie erfordern und nur im großtechnischen Maßstab bei langen Bauzeiten umsetzbar sind. Es sind weiterhin thermische Verluste zu verzeichnen.

Die bisher ebenfalls verwendeten Druckluft-Behälterspeicher weisen eine niedrige Energiedichte auf und der maximale Druck wird durch die realisierbare Behälterwandstärke begrenzt.

Die Bereitstellung von Regelleistung/-energie gewinnt zunehmend an Bedeutung. Dies ist auf den massiven Ausbau regenerativer Energien in Form von Wind- und Fotovoltaikstrom zurückzuführen. Diese Entwicklung erfordert gleichzeitig eine schnelle Leistungsanpassung seitens der Wärmekraftwerke, was heute nur bedingt möglich ist. Hier könnten mittelgroße Anlagen mit schnell regelbarer Leistung und Kraft-Wärme-Kopplung aufgrund eines effizienteren Gesamtbetriebs eine Schlüsselrolle im Vergleich zu Großkraftwerken und kleinteiligen Ansätzen (z. B. virtuelle Kraftwerke) einnehmen. Entsprechende Änderungen im Handel (z. B. Strombörse) begünstigen derartige Entwicklungen.

Aus der Druckschrift DE 10 2008 051 384 B3 ist bereits ein solarhybridbetriebenes Gas- und Dampfkraftwerk mit einer Solaranlage, einer Gasturbinenanlage und einer Dampfturbinenanlage bekannt, wobei die Solaranlage einen Receiver, die Gasturbinenanlage eine Gasturbine mit einem nachgeschalteten Abhitzekessel und die Dampfturbinenanlage eine Dampfturbine mit einem Speisewasservorwärmer aufweist. Zusätzlich ist ein Wärmeträgerkreislauf zum Übertragen solarer Wärme vorgesehen, wobei der Wärmeträgerkreislauf über einen Gasturbinenwärmeübertrager mit der Gasturbinenanlage und über einen Solarkessel mit der Dampfturbinenanlage gekoppelt ist. Alternativ zur Gasturbinenanlage und Dampfturbinenanlage weist das solarhybridbetriebene Gas- und Dampfkraftwerk eine integrierte Gas-DampfTurbine mit einem nachgeschalteten Abhitzekessel auf, wobei der Wärmeträgerkreislauf über den Gasturbinenwärmeübertrager und über den Solarkessel mit der integrierten Gas-/Dampf-Turbine gekoppelt ist. Das heiße Abgas der Gasturbine wird im Abhitzekessel zur Erzeugung von überhitztem Dampf genutzt. Parallel dazu kann der Dampf auch im Solarkessel bereitgestellt werden. Dem im Verdampfer bei Sättigungstemperatur verdampften Wasser wird im Überhitzer weitere Wärme zugeführt. Durch das weitere Erwärmen des Dampfes nehmen die Temperatur und das spezifische Volumen des Dampfes zu, er wird dabei überhitzt. Vom Solarkessel und vom Abhitzekessel strömt der Dampf über Rohrleitungen in die Dampfturbine, in der die Fluidmenge des Dampfes infolge der Abgabe technischer Arbeit abnimmt. Die Dampfmassenströme aus Solarkessel und Abhitzekessel werden vor dem Eintritt in die Dampfturbine gemischt. Ebenso wie die Gasturbine ist die Dampfturbine mit einem Generator gekoppelt, der die mechanische Leistung in elektrische Leistung umwandelt. Danach strömt der entspannte und abgekühlte Dampf in den Dampfturbinenkondensator, in dem er durch Wärmeübertragung an die Umgebung kondensiert. Das kondensierte Wasser wird durch eine Kondensatpumpe und anschließend durch den Speisewasservorwärmer im Abhitzekessel der Gasturbine geleitet und dabei vorgewärmt. Zudem wird die Temperatur des Abgases der Gasturbine verringert. Damit soll der Wirkungsgrad der Anlage erhöht werden. Das erwärmte Speisewasser gelangt zur Zwischenspeicherung zum Speisewasserbehälter. Nachfolgend wird das Wasser über Speisepumpen aus dem Speisewasserbehälter erneut dem Solarkessel und dem Abhitzekessel zugeführt, so dass ein geschlossener Kreislauf gebildet wird.

In der Druckschrift US 2008/0127647 A1 wird ein Dampfturbinenkraftwerk beschrieben, bei welchem zur Erzeugung von Heißwasser und/oder Dampf ähnlich wie in der vorgenannten Schrift DE 10 2008 051 384 B3 eine Solaranlage eingesetzt wird, die einen Speicherbehälter zur Speicherung und Erwärmung von Wasser aufweist. Der damit erzeugte Dampf wird auch in einem geschlossenen Kreislauf zum Antrieb der Dampfturbine eingesetzt. Dies erfolgt in Kombination mit einer Gasturbine, deren Abgase ebenfalls zum Antrieb der Dampfturbine verwendet werden.

In der Druckschrift DE 20 2008 002 599 U1 wird ebenfalls kein Gasturbinenkraftwerk, sondern eine Kombination von Dampfturbine und Solaranlage zur Dampferzeugung beschrieben.

Die Funktionsweise einer Dampfturbine mit einem geschlossenen Prozess ist dabei sehr unterschiedlich zu einer Gasturbine, die mit einer offenen Prozessführung arbeitet.

Nachteilig sind bei den vorgenannten Lösungen die aufwendige und komplexe Prozessführung und die begrenzte Leistungsänderungsgeschwindigkeit.

Es wurde daher gemäß DE 20 2011 000 786 U1 eine Anlage und ein Verfahren zur Erzeugung von Heißwasser und/oder Dampf und für die Speicherung von Wasser in flüssiger und/oder gasförmiger Form zum Einsatz für ein Gasturbinenkraftwerk entwickelt, mit dem auch bei Nichtbetreiben der Gasturbinenanlage ein gefordertes Temperaturniveau des Wassers gewährleistet ist, so dass das Wasser oder der daraus erzeugte Dampf bei einem Start/Neustart mit geeigneten Prozessparametern bereitgestellt wird.

Die Anlage zur Erzeugung von Heißwasser und/oder Dampf für ein Gasturbinenkraftwerk verwendet dabei zur Erwärmung des Wassers und damit zur Erzeugung des Heißwassers und/oder Dampfes die dafür benötigte Energie aus wenigstens einer externen Energiequelle, die mit der Anlage gekoppelt und außerhalb des Gasturbinenkraftwerkes und/oder der Anlage zur Erzeugung des Heißwasser und/oder Dampfes angeordnet ist. Die Erwärmung des Wassers kann dabei innerhalb oder außerhalb des jeweiligen Speicherbehälters erfolgen. Bevorzugt wird das Heißwasser und/oder der Dampf in wenigstens einem Hochtemperatur-Speichersystem gespeichert, welches zumindest einen Speicherbehälter aufweist, in dem vorteilhafter Weise die Speicherung des Wassers in unterschiedlichen Zuständen realisiert wird und in dem auch das Wasser erwärmt wird, wofür die Energie aus der wenigstens einen externen Energiequelle bereitgestellt wird.

Es ist damit möglich, das Wasser z.B. mittels externer elektrischer Energie zu erwärmen und in den Speicherbehältern zu speichern, um diese Energie im Bedarfsfall dem Gasturbinenkraftwerk zur Verfügung zu stellen.

Es wird bei dieser Lösung jedoch keine Aussage zu dem konstruktiven Aufbau des Hochtemperaturspeichers getroffen, sondern lediglich darauf hingewiesen, dass der Hochtemperaturspeicher die Einkopplung der Energie bei Temperaturen größer 95 °C realisiert, womit Heißwasser und/oder Dampf erzeugt wird und wobei der Hochtemperaturspeicherbehälter insbesondere auf einen Druck in der Größenordnung von 10 bis 20 bar oder höher ausgelegt ist.

Weitere Ausführungen zum Stand der Technik sind beschrieben in "Urbaneck, T.; Platzer, B.: Dampf- und Heißwasserspeicher für Gasturbinen-Kraftwerke. BWK - Das Energie-Fachmagazin, Verein Deutscher Ingenieure (Hrsg.), Düsseldorf, Springer-VDI-Verlag, 63. Jg. (2011) Nr. 07/08, S. 50-54. - ISSN 1618-193X". Hochtemperaturspeicher (mit der Ausnahme klassischer Heißwasser- und Dampfspeicher) werden seit den 80er Jahren intensiv erforscht. Im Bereich der Energietechnik nehmen die Hochtemperaturspeicher eine sehr wichtige Funktion bei solarthermischen Kraftwerken ein, wie vorgenannt bereits beschrieben wurde. Derartige Speicher sind aber auch für Prozesswärmeanwendungen wichtig.

Dort fungieren diese Komponenten oft als Regenerator. Ein Beispiel für einen Regeneratoreinsatz ist unter "RWE: http://www.rwe.com/web/cms/de/1265036/rwe/ innovationen/stromerzeugung/fossil-gefeuertekraftwerke/kraft-waerme-kopplung/2012 und unter FIZ Karlsruhe: http://www.kraftwerkforschung.info/hochtemperaturwaermespeicher-fuer-flexible-gudkraftwerkeJ" 2012 zu finden. Dabei werden Aussagen zur Flexibilisierung von Gas- und Dampfturbinenkraftwerken durch den Einsatz von Hochtemperatur-Wärmespeichern (FleGs) getroffen, jedoch auch hier wird die Lösung nicht detailliert beschrieben.

Die Thematik der Speicherung von Energie hat aufgrund des Zubaus von Windkraftanlagen und Fotovoltaik enorm an Bedeutung gewonnen. Zurzeit werden "Windheizer" diskutiert. Aus energetischer und volkswirtschaftlicher Sicht kann es jedoch nicht zielführend sein, Strom nur zu Heizzwecken einzusetzen. Thermische Prozesse sollten so genutzt werden, dass man möglichst viel Exergie zurückgewinnt und die anfallende Wärme effizient entsprechenden Anwendungen zuführt.

Um möglichst viel Exergie zurückzugewinnen sind hohe Speichertemperaturen in der Größenordnung von 200°C und darüber erforderlich. Die bekannten Hochdruckspeicher sind dafür jedoch nicht geeignet.

### Aufgabe der Erfindung

Daher besteht die Aufgabe der Erfindung darin, ein System zur Erzeugung von Heißwasser und/oder Dampf mit Hochtemperaturspeicher für den Einsatz in einem Gasturbinenkraftwerk zur Verfügung zu stellen, mit dem eine direkte Speicherung bei hohen Speichertemperaturen unter Nutzung einer Temperaturänderung und/oder eines Phasenwechsels realisierbar ist.

### Wesen der Erfindung

Diese Aufgabe wird mit den kennzeichnenden Merkmalen des ersten Patentanspruchs gelöst. Vorteilhafte Ausgestaltungen ergeben sich aus den Unteransprüchen.

Bei dem erfindungsgemäßen System zur Erzeugung von Heißwasser und/oder Dampf mit Hochtemperaturspeicher für den Einsatz in einem Gasturbinen-Kraftwerk wird die Energie für die Beladung des Hochtemperaturspeichers aus wenigstens einer externen Energiequelle und/oder aus einer internen Energiequelle des Gasturbinenkraftwerkes bereitgestellt, wobei das Heißwasser (HW) und/oder der Dampf (D) in einem offenen Prozess zur Einspritzung in einen Fluidstrom zwischen dem Verdichter und der Turbine und/oder der Turbine des Gasturbinenkraftwerkes zuführbar ist und der Hochtemperaturspeicher ein Speichermaterial aufweist oder aus einem Speichermaterial besteht, welches durch die internen und/oder externen Energiequellen erwärmbar ist, und durch den Hochtemperaturspeicher mit dem darin befindlichen Speichermaterial mindestens ein Kanal führt, dem Wasser oder Heißwasser mit einer Eingangstemperatur zuführbar ist, wobei ein Wärmeübergang vom Speichermedium auf das den Kanal durchströmende Wasser/Heißwasser und dadurch eine Druck- und/oder Temperaturerhöhung des Wassers/Heißwassers realisierbar ist und Heißwasser und/oder Dampf mit einer Austrittstemperatur > der Eingangstemperatur aus dem Kanal des Hochtemperaturspeichers austritt.

Durch die sehr hohe Temperatur und den extrem hohen Druck des Wassers/Dampfes, welches über den Hochtemperaturspeicher zur Einspritzung in den Gasturbinenprozess des Gasturbinenkraftwerkes zur Verfügung gestellt wird, können die Leistung und/oder der Wirkungsgrad des Gasturbinenkraftwerkes entscheidend erhöht werden.

Zur Erwärmung des Speichermediums ist dem Hochtemperaturspeicher wenigstens ein Wärmeübertrager zur indirekten Beladung zugeordnet und/oder der Hochtemperaturspeicher weist Anschlüsse zur direkten und/oder indirekten Beladung mit thermischer Energie zur Realisierung einer erforderlichen Betriebstemperatur des Hochtemperaturspeichers auf, die über der Temperatur des ausgegebenen Wassers/Dampfes liegt.

Der Wärmeübertrager ist dabei mit zumindest einer externen Energiequelle gekoppelt, die eine Temperatur größer der zu erzeugenden Austrittstemperatur des Wassers/Dampfes aufweist.

Die Anschlüsse des Hochtemperaturspeichers zur direkten Beladung sind mit zumindest einer externen Energiequelle mit einer Temperatur größer einer zu erzeugenden Austrittstemperatur des Wassers/Dampfes und/oder mit zumindest einer Elektroenergie bereitstellenden externen Energiequelle gekoppelt.

Dabei kann als externe Energiequelle beispielsweise ein Elektroheizkessel, ein Hochtemperatur-Kollektorfeld, thermische Prozessabwärme einer industriellen Anlage oder eine Kombination der vorgenannten Energiequellen Anwendung finden.

Die interne Energiequelle ist insbesondere die Bereitstellung von Wärme aus dem eigentlichen Gasturbinenprozess 1.

Durch den Hochtemperaturspeicher strömt zum Beladen des Speichermaterials mit einer Temperatur größer der zu erzeugenden Austrittstemperatur des Heißwassers/Dampfes ein Wärmeträgerfluid, so dass ein Wärmeübergang vom Wärmeträgerfluid über das Speichermaterial auf das dem Hochtemperaturspeicher zugeführte Wasser oder Heißwasser bzw. den beim Durchströmen des Hochtemperaturspeichers daraus gebildeten Dampf realisiert wird.

Der Kanal für Wasser bzw. Heißwasser und ggf. daraus gebildetem Dampf, der durch den Hochtemperaturspeicher führt, ist vorteilhafter Weise in der Art eines Rohrleitungsbündels mit mehreren Rohrwandungen ausgeführt ist und mit einem Eintritt für Wasser vom Niedertemperaturspeicher mit einer Temperatur von ca. 75 bis 100°C bzw. Heißwasser mit einer Eintrittstemperatur ab 110°C und einem Austritt für Heißwasser und/oder Dampf mit einer Austrittstemperatur in der Größenordnung von 200°C bis 650°C und ggf. auch darüber bei einem Druck von über 20 bar bis in die Größenordnung von 100 bar und ggf. auch darüber zum Einspritzen in den Gasturbinenprozess des Gasturbinenkraftwerkes versehen. Der Kanal sollte dazu entsprechend ausgelegt sein.

Das Speichermaterial besteht aus Feststoffen, wie z.B. Metallen, Guss, Baustoffen, Beton, bewehrtem Beton, keramischen Werkstoffen oder einer Kombinationen der vorgenannten Materialien und/oder es wird ein flüssiges Speichermaterial in Form von Öl, handelsüblichen synthetischen Wärmeträgern, flüssigen Metallen, flüssigem Natrium verwendet oder es wird ein Speichermaterial aus Phasenwechselmaterial in Form von Metallen (z.B. Blei, Zinn), Nitraten, Hydroxiden, Chloriden, Karbonaten, Fluoriden oder Kombinationen der vorgenannten Materialien einschließlich notwendiger Hilfsstoffe verwendet.

Selbstverständlich können auch Speichermaterialien aus Feststoffen, Flüssigkeiten und Phasenwechselmaterial beliebig miteinander kombiniert werden.

Dem Hochtemperaturspeicher wird zur Bereitstellung von vorgewärmtem Wasser vorteilhafter Weise ein Niedertemperaturspeicher vorgeschaltet. Alternativ ist es auch möglich, vorgewärmtes Wasser anderweitig bereitzustellen oder auch nicht vorgewärmtes Wasser einzuspeisen. Wasser wird bevorzugt mit einer Temperatur bis 95°C in den Hochtemperaturbehälter eingeleitet.

Wird den Hochtemperaturspeicher Heißwasser mit einer Temperatur ab 110°C unter Druck zugeführt, wurde dieses in geeigneten Anlagen, beispielsweise Heißwasseranlagen bei denen im Kessel eine Wassertemperatur von 110 °C oder mehr erreicht wird, erzeugt. Bisher werden derartige Systeme meist als geschlossene Heizsysteme verwendet, bei den das unter Druck stehende Wasser als Wärmeträger genutzt wird. Heißwasseranlagen kommen bisher beispielsweise in Fernheizanlagen für Städte zur Anwendung oder werden für den Wärmetransport in Industrieanlagen erstellt (s. Wikipedia).

Weiterhin kann dem Hochtemperaturspeicher ein Flüssigkeitsabscheider zugeordnet sein, durch welchen auf die Temperatur von insbesondere 200°C oder höher erwärmtes austretendes Heißwasser und/oder Dampf geleitet wird, um dem Kraftwerksprozess bevorzugt nur Dampf zuzuführen.

Das abgeschiedene Wasser oder Heißwasser wird in diesem Fall über eine Leitung wieder dem Eintritt des Hochtemperaturspeichers zugeführt wird.

Eine vorteilhafte Ausgestaltung der Erfindung besteht darin, dass die im Hochtemperaturspeicher vorhandenen Kanäle, durch welche Wasser/Heißwasser/Dampf vom Niedertemperaturspeicher zum Gasturbinenkraftwerk geleitet wird, auch zur Durchleitung des Wärmeträgerfluids zur Beladung des Hochtemperaturspeichers dienen. Das Wärmeträgerfluid kann Wasser/Heißwasser/Dampf oder ein anderes fluides Stoffsystem sein. In diesem Fall werden abwechselnd Heißwasser/Dampf (Entladefluid) und Wärmeträgerfluid (Beladefluid) durch die gleichen Kanäle geleitet. Dazu sind zwar entsprechende Absperrventile und weitere Hilfseinrichtungen erforderlich, dennoch ist der konstruktive Aufbau insgesamt einfacher, als wenn zwei Leitungssysteme - ein Leitungssystem für zu erzeugendes Heißwasser/Dampf (Entladefluid) und ein Leitungssystem für Wärmeträgerfluid (Beladefluid) durch den Hochtemperaturspeicher führen.

Mit der erfindungsgemäßen Anlage, die unter Verwendung interner Energiequellen und/oder externer Energiequellen erwärmten und gespeicherten Wassers zeitverzögert zur Zuführung der externen Energie betrieben wird, ist erstmalig der Energieeintrag durch die externen Energiequellen von der Energieentnahme (Speicherentladung) aus dem ersten und/oder zweiten Speicherbehälter entkoppelt. Dadurch kann die in der Anlage gespeicherte Energie schnell und effizient zum Betreiben des Gasturbinenkraftwerkes in Spitzenlastzeiten zur Verfügung gestellt werden. Dies erfolgt erstmalig dadurch, dass gespeichertes Heißwasser und/oder Dampf zur Einspritzung mit einer sehr hohen Temperatur bis 650°C und ggf. auch darüber und einem überaus hohen Druck bis 100 bar und ggf. auch darüber in einen Fluidstrom zwischen dem Verdichter und der Turbine bzw. in die Turbine des Gasturbinenkraftwerkes verwendet wird, wodurch der Wirkungsgrad bzw. die Leistung des Gasturbinenkraftwerkes erheblich gesteigert werden kann. Weiterhin ist es möglich, den Dampf aus dem Speichersystem zur Unterstützung des Anfahrens der Turbine des Gasturbinenkraftwerkes zu verwenden.

Die Einspritzung des Heißwassers bzw. Dampfes in den Fluidstrom bzw. das Brennstoffgemisch oder Rauchgas zwischen Verdichter und Turbine bzw. in die Turbine erfordert einen offenen Kreislauf/Prozess, so dass Wasser bzw. Heißwasser in diesem Kreislauf nachgespeist werden muss.

Mit dem erfindungsgemäßen System zur Erzeugung von Heißwasser und/oder Dampf mit Hochtemperaturspeicher für den Einsatz in einem Gasturbinenkraftwerk in Form einer Dampf-/Wassereinspritzung (STIG oder HAT) und in den nachgeschalteten Prozessen (z. B. Wärmeauskopplung) kann eine erhebliche temporäre Leistungssteigerung der Turbinenanlage (z. B. positive Regelleistung) bzw. eine schnelle Leistungsanpassung und eine effiziente Prozessgestaltung zur hohen Energie-/Brennstoffausnutzung realisiert werden. Weitere Vorteile sind die sich durch die Wasser- oder Dampfeinspritzung verringernde Temperatur der Turbine und die niedrigeren Emissionswerte.

Das Funktionsprinzip des Hochtemperaturspeichers beruht dabei auf der direkten Speicherung. Demzufolge wird die Temperaturänderung und/oder der Phasenwechsel des Speichermediums genutzt.

Die Wärmeübertragung bzw. die stoffliche Trennung des Wassers/Dampfes und des Speichermediums wird bevorzugt mit einem Rohrbündelapparat realisiert. Hierbei können bekannte Konstruktionen und Betriebsweisen von Dampferzeugern aus dem Kraftwerksbau angewendet werden. Bei der Wärmeübertragung im Speicherraum des Hochtemperaturspeichers (mit niedrigem Druckniveau) sind viele Varianten realisierbar, die jedoch vom Speicherstoff und der Beladung abhängen.

### Ausführungsbeispiele

Die Erfindung wird nachfolgend an Ausführungsbeispielen und zugehörigen Zeichnungen näher erläutert.

Es zeigen:
- Figur 1: eine Prinzipskizze eines Gasturbinenkraftwerkes 1,
- Figur 2: eine Prinzipskizze eines Hochtemperaturspeichers mit verschiedenen Belademöglichkeiten,
- Figur 3: verschiedene Varianten der Dampfdurchführung durch den Hochtemperaturspeicher,
- Figur 4: Beladung über Leitungen der Wasser- und/oder Dampfdurchführung durch die Energie eines Elektroheizkessels,
- Figur 5: Beladung über Leitungen der Wasser- und/oder Dampfdurchführung unter Nutzung der Abwärme der Turbine des Gasturbinenkraftwerkes,
- Figur 6: Varianten der Wärmeübertragung vom Speichermedium auf das Wasser und/oder den Dampf und der Speicherung der Wärme im Speichermedium.

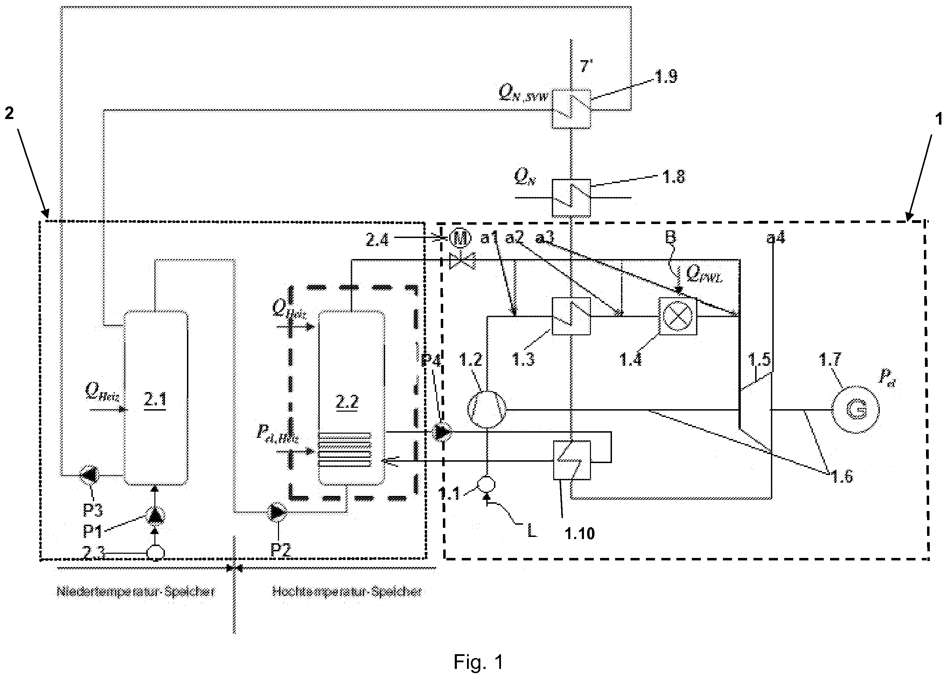

In der Darstellung gemäß Figur 1 wird die Prinzipskizze eines Gasturbinenkraftwerkes 1 gezeigt, welches mit einer dünn gestrichelten Linie umrandet ist. Dieses weist einen Ansaugstutzen 1.1 zum Ansaugen von Umgebungsluft auf, die einem Verdichter 1.2 zugeführt wird. Aus diesem gelangt die verdichtete Luft L über einen ersten Wärmeübertrager 1.3 zu einer Brennkammer 1.4, welcher flüssiger oder gasförmiger Brennstoff B (z.B. Erdgas) oder ein Brennstoffgemisch zugeführt wird.

Durch die Verbrennung in der Brennkammer wird dem Prozess eine Feuerungswärmeleistung *Q_{FWL}* zugeführt, wodurch eine Druck- und Temperaturerhöhung zu verzeichnen sind. Aus der Brennkammer 1.4 strömt das heiße Gas mit hoher Temperatur und hohem Druck zur Turbine 1.5, treibt diese an und wird entspannt. Die Turbine 1.5 betreibt über eine Welle 1.6 (oder zwei Wellen) den Verdichter 1.2 und zur Stromerzeugung den Generator 1.7. Das entspannte Gas aus der Turbine 1.5 strömt durch den ersten Wärmeübertrager 1.3 und die ebenfalls durch diesen strömende Luft L wird weiter vorgewärmt. Das aus dem ersten Wärmeübertrager 1.3 ausströmende und noch immer heiße Gas gelangt in einen zweiten Wärmeübertrager 1.8, in welchem ein Wärmeübertrag zur Entnahme von Nutzwärme *Q_{N}* erfolgt, die beispielsweise Verbrauchern als Fernwärme zur Verfügung gestellt wird.

Aus dem zweiten Wärmeübertrager 1.8 strömt das immer noch heiße Gas in einen dritten Wärmeübertrager 1.9 und wird anschließend an die Umgebung abgegeben.

Außerhalb des Gasturbinenkraftwerkes 1 ist eine Anlage 2 zur Erzeugung von Heißwasser und/oder Dampf vorgesehen (die in Figur 1 gepunktet umrandet ist), in welcher Wasser oder Heißwasser bzw. Dampf bei einem Druck über dem Niveau des Umgebungsdruckes gespeichert wird. Dazu sind hier zwei Speichersysteme vorgesehen, die mit jeweils einem Speicherbehälter versehen sind, der zur Speicherung von Wasser oder bzw. Dampf vorgesehen ist. Das Speichersystem, welches in Form eines Niedertemperatur-Speichersystems ausgebildet ist, und damit der erste Speicherbehälter 2.1 (Niedertemperaturspeicher) übernimmt in diesem Fall die Wasservorwärmung. Von diesem aus wird das vorgewärmte Wasser in das Hochtemperatur-Speichersystem geleitet, welches einen hier dick gestrichelt umrandeten Hochtemperaturspeicher 2.2 aufweist und in dem die Wassernachwärmung erfolgt.

In dem ersten Speicherbehälter 2.1 herrscht dabei ein Druck über dem Umgebungsdruck von 2-10 bar und es werden alle Energien bis 95°C eingekoppelt, so dass eine Temperatur des Wassers vorzugsweise bis 95°C erzielt wird. In den Hochtemperaturspeicher 2.2 werden alle Energien über 95°C eingebracht und das Wasser auf eine Temperatur vorzugsweise über 200°C bei einem Druck in der Größenordnung von 20 bar oder höher erwärmt, so dass es nicht oder teilweise in die Dampfphase übergeht.

Zu dem ersten Wasserbehälter 2.1 führt ein Wasseranschluss 2.3, mit welchem mittels einer ersten Pumpe P1 Wasser nachgespeist werden kann. Zwischen dem ersten Speicherbehälter 2.1 und dem Hochtemperaturspeicher 2.2 ist eine zweite Pumpe P2 vorgesehen, die das vorgewärmte Wasser aus dem ersten Speicherbehälter 2.1 in den Hochtemperaturspeicher 2.2 fördert bzw. den Druck erhöht. Der im Hochtemperaturspeicher 2.2 bereitgestellt(e) Heißwasser/Wasserdampf kann unter Druck durch Öffnen des Motorventils 2.4 an einer oder mehreren der nachfolgend aufgeführten Positionen zu der verdichteten Luft bzw. dem Luft-/Brennstoffgemisch oder Rauchgas eingespritzt werden:
- a1 - zwischen Verdichter 1.2 und ersten Wärmeübertrager 1.3,
- a2 - zwischen ersten Wärmeübertrager 1.3 und Brennkammer 1.4,
- a3 - zwischen Brennkammer 1.4 und Turbine 1.5,
- a4 - direkt in die Turbine 1.5.

Das Wasser im ersten Speicherbehälter 2.1 wird über eine dritte Pumpe P3 durch den dritten Wärmetauscher 1.9 gefördert, dadurch erwärmt und wieder dem ersten Speicherbehälter 2.1 zugeführt. Das Wasser im ersten Speicherbehälter 2.1 wird somit bei dieser Variante aus der Abwärmeleistung *Q_{N,SVW}* des Gasturbinenkraftwerkes 1 vorgewärmt, wobei das Wasser, welches über den dritten Wärmetauscher 1.9 dem ersten Speicherbehälter 2.1 zugeführt wird, eine Temperatur in der Größenordnung von 95°C nicht überschreiten sollte.

Das Gas, welches mit einer Temperatur von 300°C bis 800°C aus der Turbine 1.5 strömt, kann auch über einen vierten Wärmetauscher 1.10 geführt werden, über welchen ein Wärmeträgermedium vom Hochtemperaturspeicher 2.2 über eine vierte Pumpe P4 wieder zum Hochtemperaturspeicher 2.2 zurückgefördert wird, wodurch eine Beladung des Hochtemperaturspeichers 2.2 mittels Wärmeübergang erfolgt. Damit wird vorteilhafter Weise sowohl die Vorwärmung des Wassers im Niedertemperaturspeicher 2.1 als auch die Beladung des Hochtemperaturspeichers 2.2 durch die Abwärme des Gasturbinenkraftwerkes 1 realisiert, wobei Abwärme in unterschiedlichen Temperaturstufen genutzt wird. Diese Variante trägt zu einer überaus positiven Energiebilanz bei.

Weiterhin kann das Wasser im ersten Speicherbehälter 2.1 und im Hochtemperaturspeicher 2.2 durch extern erzeugte elektrische Energie *P_{el,,Heiz}* erwärmt werden. Diese kann beispielsweise aus negativer Regelleistung oder aus elektrischen Überschüssen bereitgestellt werden.

Zusätzlich oder alternativ können weitere externe Wärmequellen *Q_{Heiz,ext.}* zur Energiespeicherung in den Speicherbehältern 2.1 und 2.2 herangezogen werden, wodurch in dem jeweiligen Speicherbehälter 2.1 und/oder 2.1 eine Temperatur und/oder Druckerhöhung zu verzeichnen ist.

Der Wasserverlust (offene Prozessführung), der durch das Einspritzen von Wasserdampf aus dem Hochtemperaturspeicher 2.2 in das Gasturbinenkraftwerk zu verzeichnen ist, wird durch eine Wassernachspeisung im Niedertemperatur-Speicher (erster Speicherbehälter 2.1) über den Wasseranschluss 2.3 ausgeglichen.

Alternativ zu dem beschriebenen Ausführungsbeispiel kann auch nur dem im ersten Speicherbehälter 2.1 oder dem im Hochtemperaturspeicher 2.2 befindlichem Speichermedium zu dessen Erwärmung und/oder Druckerhöhung externe Energie zugeführt werden. Dies können wiederum entweder extern erzeugte elektrische Energie *P_{el,,Heiz}* und/oder externe Wärmequellen *Q_{Heiz,ext}* sein.

Dadurch, dass der dem Gasturbinenprozess in einem offenen Prozess eingespritzte Wasser/Dampf eine Temperatur über 200°C und einen Druck über 20 bar aufweist, wird im Vergleich zu herkömmlichen Lösungen eine signifikante Leistungssteigerung und/oder eine Wirkungsgradverbesserung des Gasturbinenkraftwerkes erreicht, was andere Autoren durch Berechnungen und Simulationen nachgewiesen haben.

Anstelle der Beladung des Hochtemperaturspeichers über eine interne Energiequelle in Form der Abwärme der Turbine kann auch externe thermische Prozessabwärme zu dessen Beladung dienen.

Mit der erfindungsgemäßen Lösung wird durch die Anwendung des erfindungsgemäßen Hochtemperaturspeichers eine möglichst effektive Rückgewinnung von Energieüberschüssen und die Nutzung regenerativer Energiequellen in einem Gasturbinenkraftwerk realisiert. Die Prozessführung ist so zu gestalten, dass möglichst viel Elektroenergie und/oder Wärme beim Kraftwerksbetrieb bereitgestellt werden.

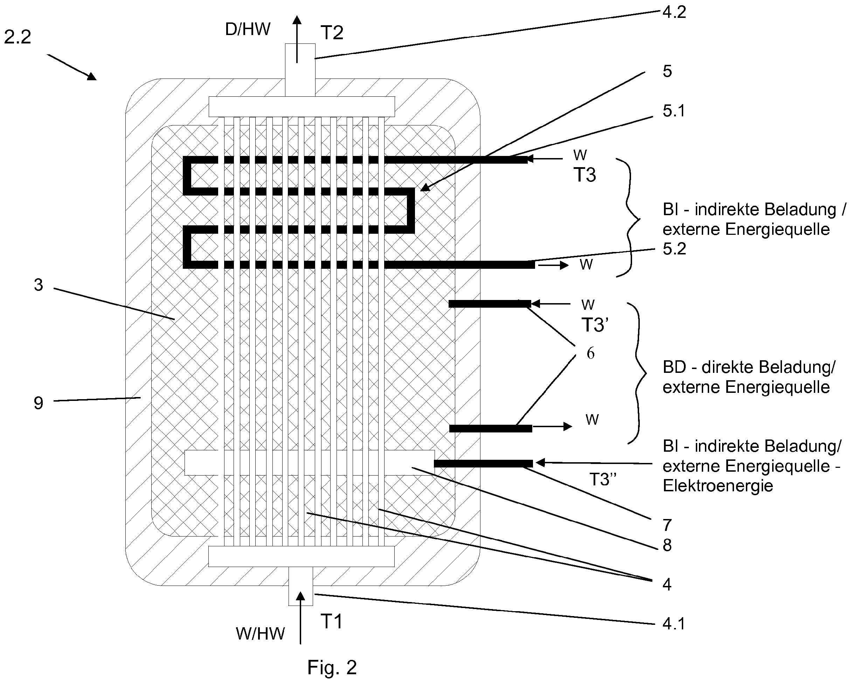

Ein Hochtemperaturspeicher 2.2 weist gem. Figur 2 einen Grundkörper 3 oder einen Behälter mit Fluiden und/oder Feststoffen auf, der aus Speichermaterial besteht oder Speichermaterial enthält, welches geeignet ist, die zugeführte Wärme zu speichern. Durch den Grundkörper 3 oder den Behälter führen Kanäle 4, durch welche Wasser W oder Heißwasser HW mit einer ersten Temperatur T1 z.B. aus dem Niedertemperaturspeicher zugeführt wird. Die Kanäle 4 sind hier in der Art eines Rohrleitungsbündels ausgebildet. Es ist an einem Ende des Grundkörpers 3 oder des Behälters ein Eintritt 4.1 für das zu erwärmende Wasser und an einem anderen Ende ein Austritt 4.2 für den durch die Erwärmung auf eine Temperatur T2 entstandenen Dampf D bzw. Heißwasser HW vorgesehen. Weiterhin befindet sich in dem Grundkörper 3 oder Behälter ein zweiter Kanal 5, der einen Eintritt 5.1 und einen Austritt 5.2 aufweist, und durch welchen ein Wärmeträgerfluid WT, welches eine sehr hohe Temperatur T3 aufweist, strömt und zur indirekten Beladung des Speichermaterials des Grundkörpers 3 oder des Behälterinhalts dient und das Speichermaterial somit auf eine Temperatur T3>T2 erwärmt, so dass das Wasser W oder Heißwasser HW bzw. der daraus gebildete Dampf D oder Heißwasser HW in den Kanälen 4 auf die gewünschte/erforderliche Temperatur T2 > T1 aufgeheizt wird. Der Kanal 5 dient somit zur indirekten Beheizung und somit Beladung des Speichermaterials über eine interne/externe nicht dargestellte Energiequelle.

Zusätzlich sind hier Anschlüsse 6 vorgesehen, die zur direkten Beladung des Speichermaterials des Grundkörpers 3 oder des Behälterinhalts mit einer externen Energiequelle verbunden sind, die ebenfalls eine Temperatur T3' zuführt, die größer ist als T2.

Es ist weiterhin ein Anschluss 7 zur indirekten Beladung über eine externe Energiequelle (mit Elektroenergie) vorgesehen, durch welche ebenfalls eine indirekte Beheizung des Speichermaterials des Grundkörpers 3 oder des Behälterinhalts auf eine Temperatur T3">T2, hier über eine Elektroheizung 8 erfolgt. Es können diese unterschiedlichen Beladungsarten BI - indirekte Beladung und BD - direkte Beladung, wie in Figur 2 dargestellt, miteinander kombiniert sein oder auch einzeln eingesetzt werden.

Der Grundkörper 3 oder der Behälter ist umfangsseitig mit einer Wärmedämmung 9 versehen. Zusätzlich oder alternativ zur Wärmedämmung 9 kann der Grundkörper 3 auch durch ein hier nicht dargestelltes Gehäuse ummantelt bzw. als Behälter ausgebildet sein.

Durch das Beladen des Hochtemperaturspeichers 2.2 wird das mit der Temperatur T1 beispielsweise aus dem Niedertemperaturspeicher zugeführte Wasser W oder das bereits als Heißwasser HW bereitgestellte zu erwärmende Medium über das mit einer Temperatur T3 beaufschlagte Speichermaterial des Grundkörpers 3 und die Rohrwandungen des Rohrleitungsbündels der Kanäle 4 auf eine sehr hohe Temperatur vorzugsweise T2 > 200°C erwärmt (bei einem Druck vorzugsweise über 20 bar) und wird bei Bedarf dem Gasturbinenprozess wie in Figur 1 beschrieben zugeführt.

Anstelle eines Rohrleitungsbündels, wie es in Figur 2 dargestellt ist, können die Kanäle 4 im Grundkörper 3 bzw. im Behälter auch als Hohlräume ausgebildet sein, z.B. wenn der Grundkörper 3 aus Metall besteht. Dann erfolgt der Wärmeübergang direkt vom Speichermaterial auf das Wasser W bzw. das Heißwasser HW und/oder den Dampf D welches/welcher durch die Kanäle 4 strömt und dadurch direkt über die Kanalwandung mit dem Speichermaterial in Kontakt kommt.

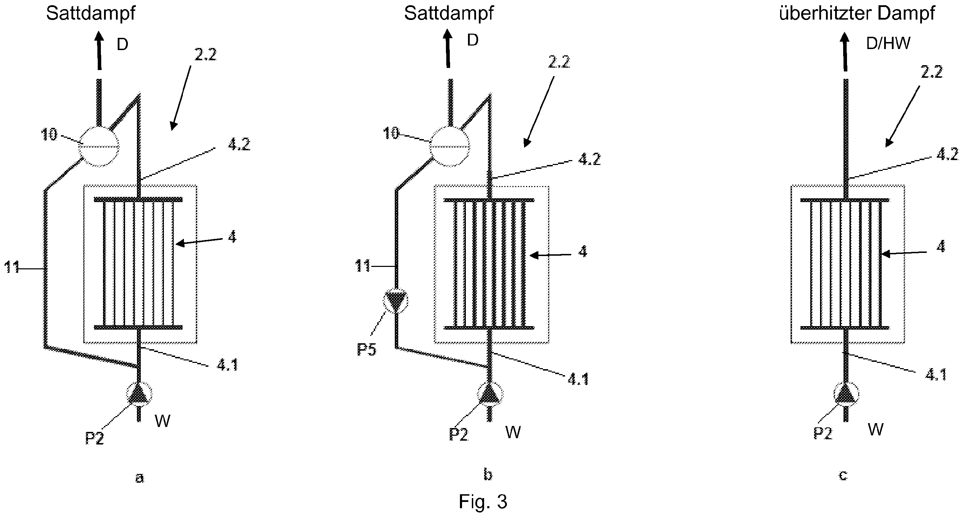

In Figur 3 sind verschiedene Varianten a, b, c der Wasser-/Dampfdurchführung durch einen Hochtemperaturspeicher 2.2 dargestellt.

In Variante a wird ein Naturumlauf gezeigt, bei welchem das Wasser W z.B. vom Niedertemperaturspeicher über die Pumpe P2 und den_Eintritt 4.1 der Kanäle 4 über diese zum Austritt 4.1 gefördert wird. An dem Austritt 4.1 schließt sich ein Flüssigkeitsabscheider 10 an, in dem von dem aus dem Hochtemperaturspeicher 2.2 austretenden heißen Dampf vorhandene flüssige Bestandteile abgetrennt werden. Der aus dem Flüssigkeitsabscheider (Dampftrommel) austretende Sattdampf wird an das Gasturbinenkraftwerk 1 weitergeleitet. Das abgeschiedene Wasser wird über eine Leitung 11 zum Eintritt 4.1 des Wassers W rückgeleitet und strömt erneut durch den Hochtemperaturspeicher 2.2.

Gemäß Variante b ist auch ein Zwangsumlauf realisierbar, bei dem im Unterschied zu Variante b in der Leitung 11 eine zusätzliche Umwälzpumpe P5 angeordnet ist, die das aus dem Flüssigkeitsabscheider 10 abgeschiedene Wasser in den Hochtemperaturspeicher 2.2 zurückführt. Wie bei Variante b tritt aus dem Flüssigkeitsabscheider 10 Sattdampf aus, der an das Gasturbinenkraftwerk 1 weitergeleitet wird.

Wurde der Dampf im Hochtemperaturspeicher 2.2 so stark überhitzt, dass kein Wasser mehr darin enthalten ist, kann dieser direkt zum Einspritzen in den Gasturbinenprozess verwendet werden (Variante c), so dass kein Umlauf bzw. keine Rückführung von Wasser in den Hochtemperaturspeicher 2.2 erforderlich ist. Hier entfallen somit der in den Varianten a und b erforderliche Dampfabscheider 10 und die in Variante b benötigte Umwälzpumpe P5. Anstelle von Dampf D kann bei dieser Variante ohne Flüssigkeitsabscheider 10 auch Heißwasser HW bei den entsprechenden Druck/Temperaturverhältnissen austreten.

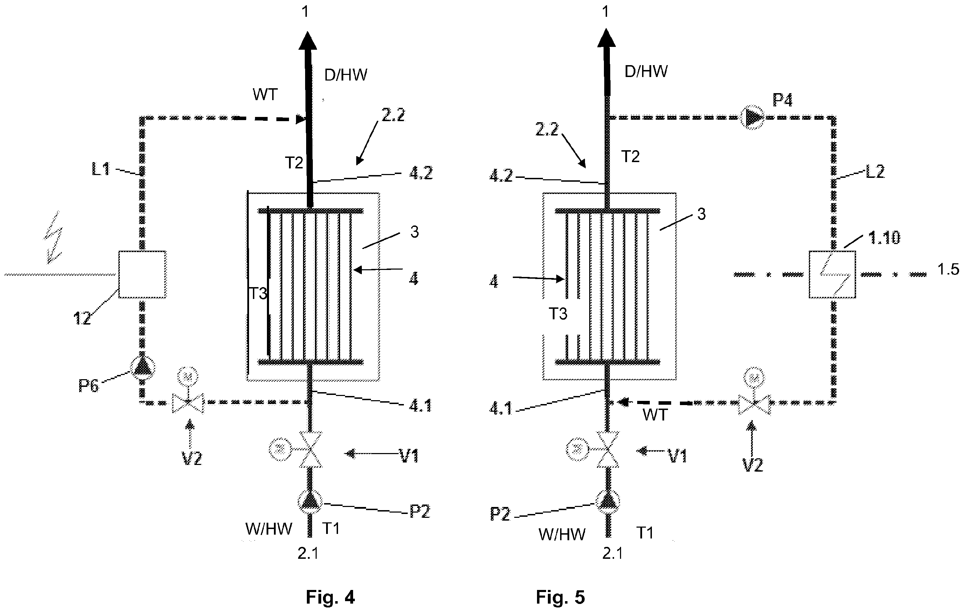

Eine weitere vorteilhafte Ausgestaltung der Erfindung ist aus den Figuren 4 und 5 ersichtlich, nach welcher die im Hochtemperaturspeicher 2.2 vorhandenen Kanäle 4 auch zur Beladung genutzt werden. Die Kanäle 4 sind in den Fig. 4 und 5 in Form eines Rohrleitungsbündels mit einem gemeinsamen Eintritt 4.1 und einem gemeinsamen Austritt 4.2 ausgebildet.

Die externe Beladung erfolgt gemäß Figur 4 über eine externe Energiequelle in Form eines Elektroheizkessels 12, der in einem zusätzlichen Kreislauf angeordnet ist und ein stark erhitztes Wärmeträgerfluid (WT) bereitstellt. Als Wärmeträgerfluid kann dabei z.B. auch Heißwasser und/oder Dampf eingesetzt werden, welches über eine Leitung L1 und eine Pumpe P6 im Gegenstromprinzip zur Durchströmrichtung des zu erwärmenden Wassers W / Heißwassers HW und daraus des Dampfes D / Heißwassers HW der dem Gasturbinenkraftwerk 1 zur Verfügung gestellt wird, durch die Kanäle 4 des Hochtemperaturspeichers 2.2 geleitet wird und dadurch den Grundkörper 3 mit/aus dem Speichermaterial oder den Behälterinhalt erwärmt. Dazu wird zwischen der Pumpe P2 und dem Einlass 4.1 ein erstes Motorventil V1 angeordnet, welches zum Absperren des Zulaufs von Wasser aus dem Niedertemperaturspeichers 2.1 dient. Ein zweites Ventil V2 im zusätzlichen Kreislauf wird geöffnet und über die Leitung L1 das über den Elektroheizkessel 12 erwärmte Wärmeträgerfluid (WT) über den Austritt 4.2 in die Kanäle 4 geleitet und tritt über den Eintritt 4.1 aus dem Hochtemperaturspeicher 2.2 und wird über die Leitung L1, das geöffnete zweite Motorventil V2 und die Pumpe P6 wieder in einem Kreislauf durch den Elektroheizkessel 12 gefördert. Hat das Speichermaterial des Grundkörpers 3 oder des Behälters die geforderte Temperatur T3 erreicht, wird das zweite Motorventil V2 geschlossen und das erste Motorventil V1 geöffnet, so dass nun das z.B. über den Niedertemperaturspeicher 2.1 oder anderweitig bereitgestellte Wasser W oder auch Heißwasser HW in bzw. durch die Kanäle 4 des Hochtemperaturspeichers 2.2 strömt und in diesem erwärmt wird. Ist die Temperatur T3 des Speichermediums auf einen vorgegebenen Minimalwert gefallen, so wird das erste Motorventil V1 wieder geschlossen und das zweite Motorventil V2 geöffnet, und über den Elektroheizkessel 12 erneut ein Beladezyklus des Hochtemperaturkessels 2.2 mit dem Wärmeträgerfluid WT durchgeführt.

Ein Beispiel, bei dem über einen zusätzlichen Kreislauf über die Kanäle 4 des Hochtemperaturspeichers 2.2 eine Beladung unter Nutzung einer internen Energiequelle analog zu Figur 1 erfolgt, ist in Figur 5 dargestellt. Das Gas, welches mit einer Temperatur von 300°C bis 800°C aus der Turbine 1.5 strömt, wird über den vierten Wärmetauscher 1.10 geführt. Nach Absperrung der Wasserzuführung vom Niedertemperaturspeicher 2.1 über ein erstes Ventil V1 wird das im Wärmetauscher 1.10 durch das Gas der Turbine erwärmte Wärmeträgerfluid WT mittels der vierten Pumpe P4 über ein zweites geöffnetes Motorventil V2 durch den Einlass 4.1, die Kanäle 4 und den Auslass 4.2 in einem Kreislauf im Gleichstromprinzip zur Durchströmrichtung des zu erwärmenden Wassers W/oder Heißwassers HW auf Dampf D oder Heißwasser HW welcher dem Gasturbinenkraftwerk 1 zur Verfügung gestellt wird, durch den Hochtemperaturspeicher 2.2 geleitet und erwärmt/belädt dadurch das Speichermaterial des Grundkörpers 3 des Hochtemperaturspeichers 2.2 bzw. den Behälterinhalt. Wurde eine gewünschte Temperatur T3 des Speichermaterials des Grundkörpers 3 oder des Behälterinhalts erzielt, wird das zweite Motorventil V2 geschlossen und das erste Motorventil V1 geöffnet, so dass nun mittels der zweiten Pumpe P2 das im Niedertemperaturspeicher 2.1 oder anderweitig mit der Temperatur T1 bereitgestellte Wasser oder auch zugeführtes Heißwasser HW durch den Hochtemperaturspeicher 2.2 gefördert, dadurch auf die gewünschte Temperatur T2 erwärmt wird und nun dem Gasturbinenkraftwerk 1 als Dampf D oder Heißwasser HW gemäß Figur 1 zugeführt werden kann.

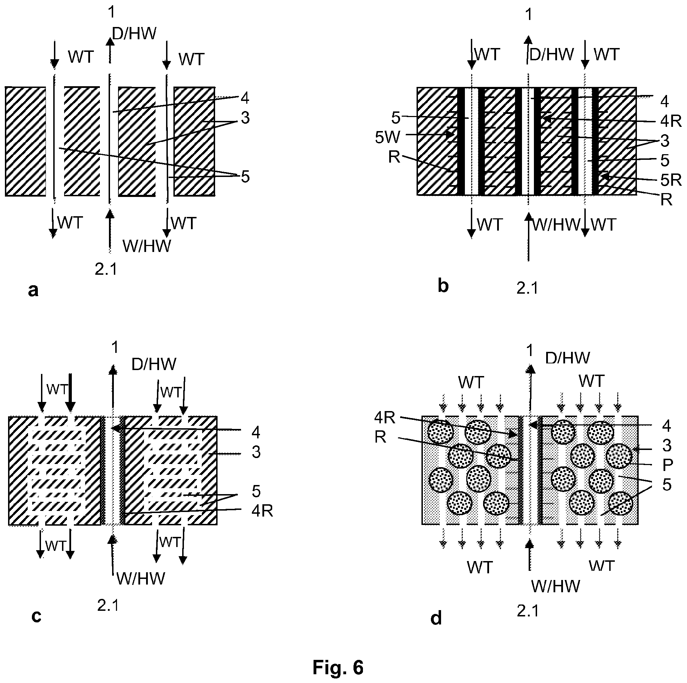

Vier Varianten der Wärmeübertragung vom Speichermedium auf Wasser und/oder Dampf und der Speicherung der Wärme im Speichermedium eines Hochtemperaturspeichers sind in Figur 6 ausschnittsweise dargestellt.

In Variante a) besteht der Grundkörper 3 aus Speichermaterial in Form eines Feststoffes wie z.B. Beton und weist in diesem ausgebildete Kanäle 4 auf, durch welche vom Niedertemperaturspeicher 2.1 Wasser W oder anderweitig bereitgestelltes Heißwasser HW zur Erwärmung und Einspritzung als Dampf D und/oder Heißwasser HW zum Gasturbinenkraftwerk 1 geleitet wird. Die Beladung erfolgt im Gegenstromprinzip durch ein Wärmeträgerfluid WT über Kanäle 5. Die Kanäle 4 und 5 sind hier direkt in dem Grundkörper 3 oder dem Behälterinhalt (Speichermaterial) ausgebildet, so dass das Wärmeträgerfluid WT über die Wandung der Kanäle 5 seine Wärme an den Grundkörper 3 bzw. den Behälterinhalt überträgt und diesen dadurch belädt. Das im Gegenstromprinzip durchgeleitete Wasser W oder Heißwasser HW nimmt die Wärme über die Wandung des Kanals 4 vom Grundkörper 3 bzw. Behälterinhalt (Speichermaterial) auf, wird dadurch erwärmt und tritt als Heißwasser/Dampf HW/D aus dem Hochtemperaturspeicher aus und entlädt diesen somit beim Durchströmen.

Im Unterschied zu Variante a) sind bei Variante b) die Kanäle 4, 5 in Rohrleitungen 4R, 5R ausgebildet, die an ihrem Außenumfang zur Vergrößerung der wärmeübertragenden Fläche mit Rippen R versehen sind. Der Grundkörper 3, der gleichzeitig das Speichermaterial bildet, kann wie in Variante a aus Feststoff (z.B. Beton) bestehen, in den die Rohrleitungen 4R, 5R mit den Rippen R eingegossen sind. Alternativ ist es auch möglich, dass der Speicherbehälter das Speichermaterial in Form einer Flüssigkeit oder eines Phasenwechselmaterials enthält, welches an die Rohrleitungen 4W, 5W angrenzt und dadurch den erforderlichen Wärmeübergang vom Wärmeträgerfluid WT über die Wandung der Rohrleitungen 5W und die Rippen R auf das Speichermaterial (Beladung des Hochtemperaturspeichers) und vom Speichermaterial über die Wandung der Rohrleitungen 4W und die Rippen R auf Wasser/Dampf W/HW/D (Entladung des Hochtemperaturspeichers) gewährleistet. Auch hier tritt Heißwasser/Dampf HW/D aus und dient zur Einspritzung in den Gasturbinenprozess des Gasturbinenkraftwerks 1.

Die Varianten c) zeigt eine Ausführung, bei welcher die durch den Grundkörper 3 führenden Kanäle 4 für Wasser/Heißwasser (Eintritt) und Dampf/Heißwasser (Austritt) durch Rohrleitungen 4R gebildet werden und die Kanäle 5, durch welche im Gegenstromprinzip das Wärmeträgerfluid WT (z.B. heiße Luft) strömt, sind als Hohlräume im Grundkörper 3 ausgebildet sind.

Die Variante d) zeigt eine Ausführung, bei welcher wie in Variante b) und c) die durch den Grundkörper 3 führenden Kanäle 4 für Wasser/Heißwasser (Eintritt) und Dampf/Heißwasser HW (Austritt) durch Rohrleitungen 4R gebildet werden. Die Kanäle 5, durch welche im Gegenstromprinzip das Wärmeträgerfluid WT strömt, sind als Hohlräume im Grundkörper 3 ausgebildet und grenzen an ein Speichermaterial in Form eines Feststoffes und/oder Phasenwechselmaterials P an, welches als verkapseltes Material (z.B. als Schüttung) in einen Behälter integriert ist. Die Schüttung bzw. die Kapseln in Form des Phasenwechselmaterials P wird/werden bei der Beladung von dem Wärmeträgermedium WT durch- bzw. umströmt. Wie in Variante b) weisen die Rohrleitungen 4R an ihrem Außenumfang eine Berippung R auf.

Bei Variante d) umströmt der Wärmeträger WT das gekapselte Phasenwechselmaterial im Speicherbehälter (Beladung). Bei der Entladung wird die Wärme vom Phasenwechselmaterial über den Wärmeträger an den Kanal 4 übertragen.

Neben dem in Figur 6 dargestellten Gegenstromprinzip ist es auch möglich, dass Wärmeträgerfluid WT und das Wasser/Heißwasser//Dampf W/HW/D im Gleichstromprinzip durch den Hochtemperaturspeicher strömen.

Auch sind andere Gestaltungsvarianten der Anordnung bzw. Ausbildung des Speichermaterials möglich.

Es ist weiterhin möglich, dass dem Hochtemperaturspeicher zugeführte Wasser nicht über einer Niedertemperaturspeicher vorzuwärmen, sondern anderweitig eine Vorwärmung des Wassers zu realisieren. Denkbar ist ebenfalls, dass dem Hochtemperaturspeicher Wasser zugeführt wird, welches nicht vorgewärmt ist.

Eine weitere Variante besteht darin, dass dem Hochtemperaturspeicher Heißwasser mit einer Temperatur T1 ab 110°C zugeführt wird, welches im Hochtemperaturspeicher weiter auf eine Temperatur T2 vorzugsweise größer 200°C erwärmt wird.

## Patentansprüche

1. System geeignet zur Erzeugung von Heißwasser (HW) und/oder Dampf (D) mit einem Hochtemperaturspeicher (2.2) für ein Gasturbinenkraftwerk (1), und geeignet um das Heißwasser und/oder den Dampf (D) in einem offenen Prozess zur Einspritzung in einen Fluidstrom zwischen dem Verdichter und der Turbine und/oder der Turbine des Gasturbinenkraftwerkeszuzuführen, wobei
- der Hochtemperaturspeicher ein durch interne und/oder externe Energiequellen erwärmbares Speichermaterial aufweist, wobei
- der Hochtemperaturspeicher (2.2) Anschlüsse zur direkten und/oder indirekten Beladung des Speichermaterials aufweist,
o Anschlüsse (5.1, 5.2) mit zumindest einer externen Energiequelle zur indirekten Beladung und die Erwärmung des Speichermaterials auf eine Temperatur T3>T2 verbunden sind und/oder
o Anschlüsse (6) zur direkten Beladung und die Erwärmung des Speichermaterials auf eine Temperatur T3'>T2 mit zumindest einer externen Energiequelle gekoppelt sind und/oder
o Anschlüsse (7) des Hochtemperaturspeichers (2.2) zu seiner indirekten Beladung und die Erwärmung des Speichermaterials auf eine Temperatur T3">T2 mit mindestens einer, Elektroenergie bereitstellenden, externen Energiequelle gekoppelt sind,
- durch den Hochtemperaturspeicher (2.2) mit dem darin befindlichen Speichermaterial mindestens ein Kanal (4) führt, der einen Eintritt (4.1) für Wasser (W) oder Heißwasser (HW) mit einer Eingangstemperatur (T1) aufweist und dass der Kanal (4) einen Austritt (4.2) aus dem Hochtemperaturspeicher aufweist, durch den das Heißwasser (W) und/oder der Dampf (D) mit einer Austrittstemperatur (T2>T1) von mindestens 100°C und einem Druck von mindestens 1 bar austritt, da ein Wärmeübergang vom Speichermaterial auf das dem Hochtemperaturspeicher zugeführte Wasser (W) oder Heißwasser (HW) erfolgt
- und wobei das Speichermaterial aus
o Feststoffen in Form von Metallen, Guss, Baustoffen, Beton, bewehrtem Beton, keramischen Werkstoffen oder Kombinationen der vorgenannten Materialien besteht und/oder
o aus Flüssigkeit in Form von Öl, handelsüblichen synthetischen Wärmeträgern, flüssigen Metallen, flüssigem Natrium besteht und/oder
o aus Phasenwechselmaterial in Form von Metallen, insbesondere Blei oder Zinn, Nitraten, Hydroxiden, Chloriden, Karbonaten, Fluoriden oder Kombinationen der vorgenannten Materialien einschließlich notwendiger Hilfsstoffe besteht.

2. System nach Anspruch 1 wobei dieses geeignet ist, dass das aus zumindest einem Austritt des Kanals (4) austretende Heißwasser (HW) und/oder Dampf (D) eine Austrittstemperatur von 100°C bis 650°C und einen Druck von 1 bar bis 100 bar aufweist.

3. System nach Anspruch 1 oder 2, wobei zur Erwärmung des Speichermediums dem Hochtemperaturspeicher (2.2) wenigstens ein Wärmeübertrager zur indirekten Beladung zugeordnet ist.

4. System nach einem der Ansprüche 1 bis 3, wobei der Wärmeübertrager mit einer externen Energiequelle gekoppelt ist, die eine Temperatur (T3) > einer zu erzeugenden Austrittstemperatur (T2) des Heißwassers/Dampfes (HW/D) aufweist.

5. System nach einem der Ansprüche 1 bis 4, wobei
- die externe Energiequelle ein Elektroheizkessel, ein Hochtemperaturkollektorfeld, thermische Prozessabwärme einer industriellen Anlage oder eine Kombination der vorgenannten Energiequellen ist und
- die interne Energiequelle einen Wärmeentzug aus dem Gasturbinenkraftwerk realisiert.

6. System nach einem der Ansprüche 1 bis 5, wobei durch den Hochtemperaturspeicher (2.2) zum Beladen des Speichermaterials mit einer Temperatur (T3) > der zu erzeugenden Austrittstemperatur (T2) des Heißwassers/Dampfes (HW/D) ein Wärmeträgerfluid (WT) strömt, was auch das Wasser (W/HW/D) des Speicherprozesses selbst sein kann.

7. System nach einem der Ansprüche 1 bis 6, wobei der Kanal (4), der durch den Hochtemperaturspeicher (2.2) führt, in der Art eines Rohrleitungsbündels mit mehreren Rohrwandungen (4W) ausgeführt ist und einen Eintritt (4.1) für Wasser (W) und/oder Heißwasser (HW) mit einer Temperatur (T1) und einen Austritt (4.2) für Heißwasser/Dampf (HW/D) mit einer Austrittstemperatur (T2) >(T1) zum Einspritzen in einen Gasturbinenprozess des Gasturbinenkraftwerkes (1) aufweist.

8. System nach einem der Ansprüche 1 bis 7, wobei diesem wahlweise ein Niedertemperaturspeicher vorgeschaltet ist, der vorgewärmtes Wasser bereitstellt.

9. System nach einem der Ansprüche 1 bis 8, wobei dem Hochtemperaturspeicher (2.2) ein Flüssigkeitsabscheider (10) zugeordnet ist, durch welchen auf die Temperatur (T2) erwärmtes austretendes Heißwasser/Dampf (HW/D) geleitet wird.

10. System nach Anspruch 9, wobei im Flüssigkeitsabscheider (10) abgeschiedenes Wasser über eine Leitung (11) wieder dem Eintritt (4.1) des Hochtemperaturspeichers (2.2) zugeführt wird.

11. System nach einem der Ansprüche 1 bis 10, wobei die im Hochtemperaturspeicher (2.2) vorhandenen Kanäle (4), durch welche Heißwasser (HW) und/oder Dampf (D) geleitet wird, auch zur Durchleitung des Wärmeträgerfluids (WT) zur Beladung des Hochtemperaturspeichers (2.2) dienen.

## Claims

1. System suitable for producing hot water (HW) and/or steam (D), comprising a high-temperature reservoir (2.2) for a gas turbine power plant (1), and suitable for feeding the hot water and/or steam (D) in an open process for injection into a fluid flow between the compressor and the turbine and/or the turbine of the gas turbine power plant, wherein
- the high-temperature reservoir has a reservoir material heatable by internal and/or external energy sources, wherein
- the high-temperature reservoir (2.2) has connections for direct and/or indirect charging of the reservoir material,
o connections (5.1, 5.2) are connected to at least one external energy source for indirect charging and heating of the reservoir material to a temperature T3>T2 and/or
o connections (6) for direct charging and heating of the reservoir material to a temperature T3'>T2 are coupled to at least one external energy source and/or
o connections (7) of the high-temperature reservoir (2.2) for its indirect charging and the heating of the reservoir material to a temperature T3">T2 are coupled to at least one external energy source providing electrical energy,
- at least one channel (4) leads through the high-temperature reservoir (2.2) with the reservoir material located therein, which channel (4) has an inlet (4.1) for water (W) or hot water (HW) with an inlet temperature (T1), and in that the channel (4) has an outlet (4. 2) from the high-temperature reservoir, through which the hot water (W) and/or the steam (D) emerges with an outlet temperature (T2>T1) of at least 100°C and a pressure of at least 1 bar, since a heat transfer takes place from the reservoir material to the water (W) or hot water (HW) supplied to the high-temperature reservoir,
- and wherein the reservoir material consists of
o solids in the form of metals, cast iron, building materials, concrete, reinforced concrete, ceramic materials or combinations of the aforementioned materials and/or
o liquid in the form of oil, commercially available synthetic heat carriers, liquid metals, liquid sodium and/or
o phase change material in the form of metals, in particular lead or tin, nitrates, hydroxides, chlorides, carbonates, fluorides or combinations of the aforementioned materials including necessary auxiliary materials.

2. System according to claim 1, wherein this is suitable that the hot water (HW) and/or steam (D) emerging from at least one outlet of the channel (4) has an outlet temperature of 100°C to 650°C and a pressure of 1 bar to 100 bar.

3. System according to claim 1 or 2, wherein at least one heat exchanger for indirect charging is assigned to the high-temperature reservoir (2.2) for heating the reservoir medium.

4. System according to one of claims 1 to 3, wherein the heat exchanger is coupled to an external energy source having a temperature (T3) > an outlet temperature (T2) of the hot water/steam (HW/D) to be produced.

5. System according to one of claims 1 to 4, wherein
- the external energy source is an electric boiler, a high-temperature collector array, thermal process waste heat from an industrial plant, or a combination of the aforementioned energy sources,
- and the internal energy source implements a heat extraction from the gas turbine power plant.

6. System according to one of claims 1 to 5, wherein a heat transfer fluid (WT) flows through the high-temperature reservoir (2.2) for charging the reservoir material with a temperature (T3) > the outlet temperature (T2) of the hot water/steam (HW/D) to be produced, which may also be the water (W/HW/D) of the storage process itself.

7. System according to one of claims 1 to 6, wherein the channel (4) leading through the high-temperature reservoir (2.2) is designed in the manner of a pipe bundle having a plurality of pipe walls (4W) and has an inlet (4.1) for water (W) and/or hot water (HW) with a temperature (T1) and an outlet (4.2) for hot water/steam (HW/D) with an outlet temperature (T2)>(T1) for injection into a gas turbine process of the gas turbine power plant (1).

8. System according to one of claims 1 to 7, wherein a low-temperature reservoir providing preheated water is optionally provided upstream thereof.

9. System according to one of claims 1 to 8, wherein a liquid separator (10) is associated with the high-temperature reservoir (2.2), through which outgoing hot water/steam (HW/D) heated to the temperature (T2) is passed.

10. System according to claim 9, wherein water separated in the liquid separator (10) is fed back to the inlet (4.1) of the high-temperature reservoir (2.2) via a line (11).

11. System according to one of claims 1 to 10, wherein the channels (4) present in the high-temperature storage tank (2.2), through which hot water (HW) and/or steam (D) is passed, also serve to pass the heat transfer fluid (WT) for charging the high-temperature reservoir (2.2).

## Revendications

1. Système convenant pour la production d'eau chaude (HW) et/ou de vapeur (D) avec un accumulateur à haute température (2.2) pour une centrale génératrice à turbine à gaz (1) et convenant pour amener l'eau chaude et/ou la vapeur (D) en circuit ouvert en vue de leur injection dans un flux de fluide entre le compresseur et la turbine et/ou à la turbine de la centrale génératrice à turbine à gaz, dans lequel
- l'accumulateur à haute température comporte un matériau accumulateur pouvant être chauffé par des sources d'énergie internes et/ou externes, dans lequel
- l'accumulateur à haute température (2.2) comporte des raccords pour le chargement direct et/ou indirect du matériau accumulateur,
o des raccords (5.1, 5.2) sont reliés à au moins une source d'énergie externe pour le chargement indirect du matériau accumulateur et son chauffage à une température T3 > T2 et/ou
o des raccords (6) sont couplés avec au moins une source d'énergie externe pour le chargement direct du matériau accumulateur et son chauffage à une température T3' > T2 et/ou
o des raccords (7) de l'accumulateur à haute température (2.2) sont couplés à au moins une source d'énergie externe fournissant de l'énergie électrique pour le chargement indirect du matériau accumulateur et son chauffage à une température T3" > T2,
- au moins un conduit (4) comportant une entrée (4.1) pour de l'eau (W) ou de l'eau chaude (HW) à une température d'entrée (T1) passe à travers l'accumulateur à haute température (2.2) avec le matériau accumulateur que contient celui-ci, et le conduit (4) comporte une sortie (4.2) de l'accumulateur à haute température par laquelle l'eau chaude (W) et/ou la vapeur (D) sortent à une température de sortie (T2 > T1) d'au moins 100 °C et une pression d'au moins 1 bar parce qu'une transmission de chaleur a lieu entre le matériau accumulateur et l'eau (W) ou l'eau chaude (HW) amenée à l'accumulateur à haute température,
- et dans lequel le matériau accumulateur se compose
o de solides sous la forme de métaux, de fonte, de matériaux de construction, de béton, de béton armé, de matériaux céramiques ou de combinaisons desdits matériaux et/ou
o d'un liquide sous la forme d'huile, de liquides caloporteurs de synthèse courants dans le commerce, de métaux liquides, de sodium liquide et/ou
o d'un matériau à changement de phase sous la forme de métaux, en particulier de plomb ou d'étain, de nitrates, d'hydroxydes, de chlorures, de carbonates, de fluorures ou de combinaisons desdits matériaux, incluant les adjuvants nécessaires.

2. Système selon la revendication 1, convenant pour que l'eau chaude (HW) et/ou la vapeur (D) sortant par au moins une sortie du conduit (4) présentent une température de sortie de 100 °C à 650 °C et une pression de 1 bar à 100 bars.

3. Système selon la revendication 1 ou 2 dans lequel, afin de chauffer le matériau accumulateur, au moins un caloporteur est associé à l'accumulateur à haute température (2.2) en vue d'un chargement indirect.

4. Système selon l'une des revendications 1 à 3, dans lequel le caloporteur est couplé à une source d'énergie externe qui présente une température (T3) supérieure à une température de sortie (T2) à atteindre de l'eau chaude/de la vapeur (HW/D).

5. Système selon l'une des revendications 1 à 4, dans lequel
- la source d'énergie externe est une chaudière de chauffage électrique, un champ de capteurs à haute température, la chaleur de process dissipée d'une installation industrielle ou une combinaison desdites sources d'énergies et
- la source d'énergie interne prélève de la chaleur sur la centrale génératrice à turbine à gaz.

6. Système selon l'une des revendications 1 à 5, dans lequel, pour charger le matériau accumulateur à une température (T3) supérieure à la température de sortie (T2) à atteindre de l'eau chaude/de la vapeur (HW/D), un fluide caloporteur (WT), qui peut aussi être l'eau (W/HW/D) du processus d'accumulation elle-même, circule à travers l'accumulateur à haute température (2.2).

7. Système selon l'une des revendications 1 à 6, dans lequel le conduit (4) qui passe à travers l'accumulateur à haute température (2.2) est réalisé sous la forme d'un faisceau de tubes avec plusieurs parois de tube (4W) et présente une entrée (4.1) pour de l'eau (W) et/ou de l'eau chaude (HW) à une température (T1) et une sortie (4.2) pour de l'eau chaude/de la vapeur (HW/D) à une température de sortie (T2) > (T1) en vue de l'injection dans un processus de turbine à gaz de la centrale génératrice à turbine à gaz (1).

8. Système selon l'une des revendications 1 à 7, en amont duquel un accumulateur à basse température fournissant de l'eau préchauffée peut optionnellement être monté.

9. Système selon l'une des revendications 1 à 8, dans lequel un séparateur de liquide (10), à travers lequel l'eau chaude/la vapeur (HW/D) sortante chauffée à la température (T2) est acheminée, est associé à l'accumulateur à haute température (2.2).

10. Système selon la revendication 9, dans lequel de l'eau séparée dans le séparateur de liquide (10) est ramenée à l'entrée (4.1) de l'accumulateur à haute température (2.2) via une conduite (11).

11. Système selon l'une des revendications 1 à 10, dans lequel les conduits (4) présents dans l'accumulateur à haute température (2.2) par lesquels l'eau chaude (HW) et/ou la vapeur (D) sont acheminées servent aussi au passage du fluide caloporteur (WT) pour le chargement de l'accumulateur à haute température (2.2).
